# EUROPEAN PATENT APPLICATION

(11) **EP 3 605 321 A1**
(43) Date of publication of application: **05.02.2020**
(21) Application number: 19189905.3
(22) Date of filing: 02.08.2019
(51) Int. Cl.: G06F 8/65, B66B 1/34, B66B 5/00, G05B 19/042, H04L 29/08

(54) **WEB BASED STORAGE FOR MICROPROCESSOR AND MICRO CONTROLLER BASED PRODUCT SOFTWARE MANAGEMENT**

(30) Priority: 02.08.2018 IN 201811029079
(71) Applicant: Otis Elevator Company, Farmington, Connecticut 06032 (US)
(72) Inventor: GRONDINE, Arthur T., Farmington, CT Connecticut (US); NADIMPALLI, Madhavaraju, 500081 Telangana (IN); YEDDI, Naveen Kumar, 500081 Telangana (IN); MANYAM, Veeranjaneyulu, 500081 Telangana (IN); MARPU, Appalaraju, 500081 Telangana (IN); KUMAR, Rohit, 500081 Telangana (IN); PARILLO, Shari R., Farmington, CT Connecticut (US); VULLI, Gopala Rao, 500081 Telangana (IN); TRIPATHI, Dinesh Kumar, 500081 Telangana (IN)
(74) Representative: Dehns

(57) **Abstract**

A processor-implemented method for pushing a revision to an automated passenger conveying subsystem is provided. The processor-implemented method receives the revision over a network to make the revision available to one or more subsystems. An application executed on a processor of the network, then, receives a selection input identifying the automated passenger conveying subsystem of the one or more subsystems. In turn, the application sends a message to the automated passenger conveying subsystem based on the selection input. The message identifies that the revision is available for downloading and deployment. An exchange operation is executed to push the revision to the automated passenger conveying subsystem.

## Description

### BACKGROUND

Typical procedures for managing and updating software utilized by elevator systems are limited to programming using a manual process where a mechanic must make an onsite visit. Once onsite, the mechanic powers down an elevator, programs new software, starts up the elevator, checks the new software, and returns the elevator back to service. The manual process may be labor intensive and may take a long amount time to perform on each elevator or the elevator system. In this way, typical procedures for managing software utilized by the elevator systems may be costly with respect to manpower and elevator downtime.

### BRIEF SUMMARY

According to one or more embodiments, a processor-implemented method for pushing a revision to an automated passenger conveying subsystem is provided. The processor-implemented method receives the revision over a network to make the revision available to one or more subsystems. An application executed on a processor of the network, then, receives a selection input identifying the automated passenger conveying subsystem of the one or more subsystems. In turn, the application sends a message to the automated passenger conveying subsystem based on the selection input. The message identifies that the revision is available for downloading and deployment. An exchange operation is executed to push the revision to the automated passenger conveying subsystem.

According to one or more embodiments or the above processor-implemented method embodiment, receiving the revision can include storing the revision on a database or firmware service of the network.

According to one or more embodiments or any of the above processor-implemented method embodiments, the revision can include a data update, a software update, or a configuration update for a class of devices or components of the one or more subsystems.

According to one or more embodiments or any of the above processor-implemented method embodiments, the selection input can include a user input identifying the automated passenger conveying subsystem from the one or more subsystems and a device or component of the automated passenger conveying to receive the revision.

According to one or more embodiments or any of the above processor-implemented method embodiments, the exchange operation can include the automated passenger conveying subsystem downloading the revision from a database of the network via the application or a firmware service of the network and deploying the revision to a device or component of the automated passenger conveying.

According to one or more embodiments or any of the above processor-implemented method embodiments, the exchange operation can include the automated passenger conveying subsystem providing log files to the network with respect to operations of a device or component of the automated passenger conveying.

According to one or more embodiments or any of the above processor-implemented method embodiments, the automated passenger conveying subsystem can be an elevator system, an escalator system, or a people mover system, and the network can be a cloud distribution system executing the application on at least the processor.

In addition to one or more of the features described herein, or as an alternative, further embodiments any of the above processor-implemented method embodiments being implemented as a computer program product and/or a product software management system.

Technical effects of embodiments of the present disclosure include improving operations of revision for automated passenger conveying subsystems and components therein by enabling individual revisions to be targeted from a cloud distribution system perspective and then allowing the automated passenger conveying subsystems to download and deploy the individual revisions as needed. In this regard, a reduced man power required on site (e.g., at the automated passenger conveying subsystem locations) due to not having to manually identify, hand carry, and load correct software versions to each individual site; an elimination of specific types of site visits, and an enabling of parallel updates to multiple sites are achieved.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF THE DRAWINGS

The present disclosure is illustrated by way of example and not limited in the accompanying figures in which like reference numerals indicate similar elements.
FIG. 1 is a schematic illustration of an elevator system that may employ various embodiments of the present disclosure;
FIG. 2 illustrates a product software management system according to one or more embodiments;
FIG. 3 illustrates a process flow according to one or more embodiments; and
FIG. 4 illustrates a process flow according to one or more embodiments.

### DETAILED DESCRIPTION

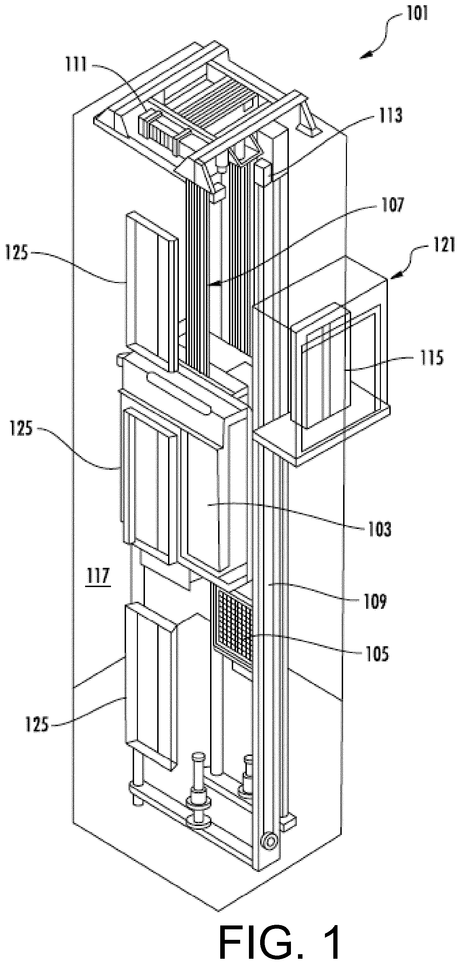

FIG. 1 is a perspective view of an elevator system 101 including an elevator car 103, a counterweight 105, a tension member 107, a guide rail 109, a machine 111, a position reference system 113, and a controller 115. The elevator car 103 and counterweight 105 are connected to each other by the tension member 107. The tension member 107 may include or be configured as, for example, ropes, steel cables, and/or coated-steel belts. The counterweight 105 is configured to balance a load of the elevator car 103 and is configured to facilitate movement of the elevator car 103 concurrently and in an opposite direction with respect to the counterweight 105 within an elevator shaft 117 and along the guide rail 109.

The tension member 107 engages the machine 111, which is part of an overhead structure of the elevator system 101. The machine 111 is configured to control movement between the elevator car 103 and the counterweight 105. The position reference system 113 may be mounted on a fixed part at the top of the elevator shaft 117, such as on a support or guide rail, and may be configured to provide position signals related to a position of the elevator car 103 within the elevator shaft 117. In other embodiments, the position reference system 113 may be directly mounted to a moving component of the machine 111, or may be located in other positions and/or configurations as known in the art. The position reference system 113 can be any device or mechanism for monitoring a position of an elevator car and/or counter weight, as known in the art. For example, without limitation, the position reference system 113 can be an encoder, sensor, or other system and can include velocity sensing, absolute position sensing, etc., as will be appreciated by those of skill in the art.

The controller 115 is located, as shown, in a controller room 121 of the elevator shaft 117 and is configured to control the operation of the elevator system 101, and particularly the elevator car 103. For example, the controller 115 may provide drive signals to the machine 111 to control the acceleration, deceleration, leveling, stopping, etc. of the elevator car 103. The controller 115 may also be configured to receive position signals from the position reference system 113 or any other desired position reference device. When moving up or down within the elevator shaft 117 along guide rail 109, the elevator car 103 may stop at one or more landings 125 as controlled by the controller 115. Although shown in a controller room 121, those of skill in the art will appreciate that the controller 115 can be located and/or configured in other locations or positions within the elevator system 101 In one embodiment, the controller may be located remotely or in the cloud.

The machine 111 may include a motor or similar driving mechanism. In accordance with embodiments of the disclosure, the machine 111 is configured to include an electrically driven motor. The power supply for the motor may be any power source, including a power grid, which, in combination with other components, is supplied to the motor. The machine 111 may include a traction sheave that imparts force to tension member 107 to move the elevator car 103 within elevator shaft 117.

Although shown and described with a roping system including tension member 107, elevator systems that employ other methods and mechanisms of moving an elevator car within an elevator shaft may employ embodiments of the present disclosure. For example, embodiments may be employed in ropeless elevator systems using a linear motor to impart motion to an elevator car. Embodiments may also be employed in ropeless elevator systems using a hydraulic lift to impart motion to an elevator car. FIG. 1 is merely a non-limiting example presented for illustrative and explanatory purposes.

In other embodiments, the system comprises a conveyance system that moves passengers between floors and/or along a single floor. Such conveyance systems may include escalators, people movers, etc. Accordingly, embodiments described herein are not limited to elevator systems, such as that shown in FIG. 1.

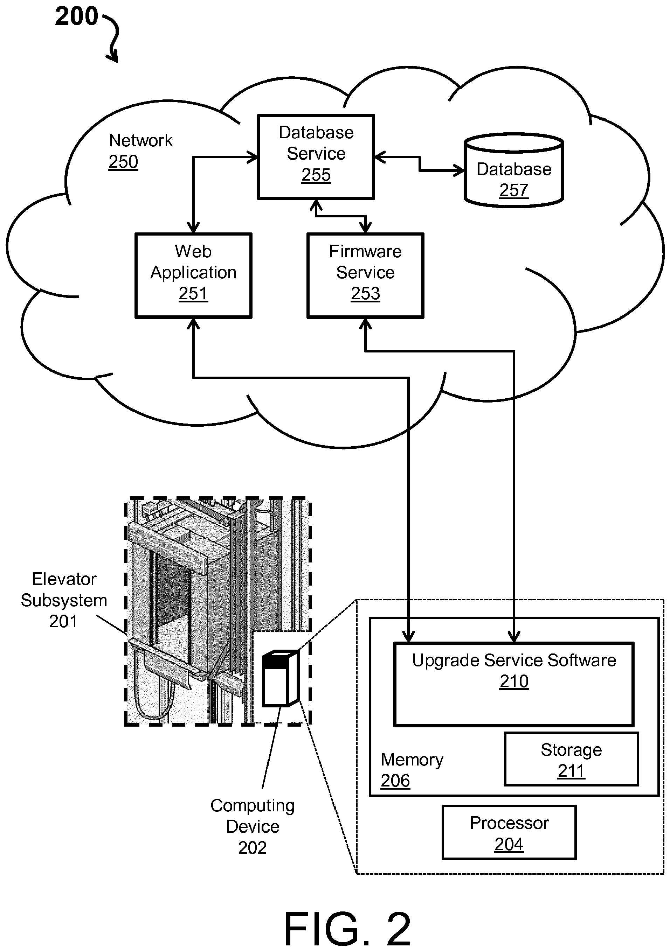

FIG. 2 depicts a product software management system 200 according to one or more embodiments, which can be realized as processor-implemented methods and/or computer program products. The product software management system 200 includes an elevator subsystem 201, which is an example of an automated passenger conveying system. The elevator subsystem 201 includes at least a computing device 202 that further includes a processor 204 and a memory 206. The memory 206 includes at least update service software 210 and storage 211. The product software management system 200 also includes a network 250, which includes and supports a web application 251, a firmware service 253, a database service 255, and a database 257. The product software management system 200 and elements therein may take many different forms and include multiple and/or alternate components and facilities. The product software management system 200 is only one example and is not intended to suggest any limitation as to the scope of use or operability of embodiments described herein (indeed additional or alternative components and/or implementations may be used). While single items are illustrated for the product software management system 200 (and other items), these representations are not intended to be limiting and thus, any items may represent a plurality of items.

In general, the product software management system 200 pushes updates to the elevator subsystem 201 by a message from the network 250. In operation, the message indicates that data, software, and/or configuration updates are available for the elevator subsystem 201, and the elevator subsystem 201 downloads and deploys the data, software, and/or configuration updates in response to the message. Note that the elevator subsystem 201, while discussed herein with respect to FIG. 2, is representative of any automated passenger conveying system, such as escalators and/or moving walkways. The product software management system 200 communicates signals between the elevator subsystem 201, the network 250, and elements therein (e.g., the computing device 202, the web application 251, the firmware service 253, the database service 255, and the database 257) to support this messaging, downloading, and deploying. In this regard, the product software management system supports performing uploads of revisions to the network 250, selections revisions with respect to the computing device 202 and other components of the elevator system, automated revision deployment (e.g., installing of revisions by the elevator subsystem 201), remote downloads (e.g., procedure to download revisions), providing interfaces and notifications to users, etc.

In accordance with one or more embodiments of the disclosure herein, the elevator subsystem 201 is an example of the elevator system 101 if FIG. 1. In this regard, for example, the elevator subsystem 201 includes electromechanical arrangements (e.g., a controller and/or computing device, such as computing device 202)) that controls speed, position, and door operation of an elevator (e.g., of a bank of elevators) by communicating over a Control Area Network (CAN) bus with at least one motor). In accordance with one or more embodiments, the elevator subsystem 201 utilizes the controller, such as the computing device 202, to update non-safety nodes connected on the CAN bus. Further, the elevator subsystem 201 can utilize the controller to update other software components of the elevator system 201, such as destination dispatch systems, access control/security systems, etc.

The computing device 202 (i.e., a controller of the elevator system 201) is in the form of a general-purpose computing device that is improved upon by the operation and functionality of the embodiments described herein. As shown in FIG. 2, the components of the computing device 202 includes, but are not limited to, the processor 204 and the memory 206.

The processor 204 includes any processing hardware, software, or combination of hardware and software utilized by the computing device 202 that carries out the computer readable program instructions by performing arithmetical, logical, and/or input/output operations. Examples of the processor 204 include, but are not limited to an arithmetic logic unit, which performs arithmetic and logical operations; a control unit, which extracts, decodes, and executes instructions from a memory; and an array unit, which utilizes multiple parallel computing elements.

The memory 206 is a tangible device that retains and stores computer readable program instructions or at least one program product (e.g., the update service software 210) for use by the processor 204 of the computing device 202 to carry out the operations of embodiments herein. The memory 206 can include a variety of computer system readable media. Such media may be any available media that is accessible by the computing device 202, and it includes both volatile and non-volatile media, removable and non-removable media.

The computing device 202 is only one example of a suitable computing node and is not intended to suggest any limitation as to the scope of use or operability of embodiments described herein (indeed additional or alternative components and/or implementations may be used). That is, the computing device 202 and elements therein may take many different forms and include multiple and/or alternate components and facilities. For instance, the computing device 202 can be any and/or employ any number and combination of computing devices and networks utilizing various communication technologies, as described herein.

In accordance with one or more embodiments of the disclosure herein, based on communications between the network 250 and the elevator subsystem 201, the computing device 202 receives messages and revisions for devices and/or components of the elevator subsystem 201. The devices and/or components the elevator subsystem 201 and the computing device 202 can be categorized in classes, such as dispatch controllers, display controllers, drive controllers, door controllers, temperature controllers, sensors, motors, lights, displays, etc. In an embodiment, the computing device 202 is a global control system (GCS) that includes a GCS controller board (also known as a global elevator control board (GECB)), which further executes a controller application (e.g., application software). The controller application, in general, can schedule revision deployments on a per message basis and can cause the GCS to take the elevator out of service (e.g., disable the elevator for user operation) when performing a revision deployment. Once the revision deployment is complete, the controller application can communicate with the network 250 to provide log files with respect to the revision deployment.

In accordance with one or more embodiments of the disclosure herein, the update service software 210 is computer readable instructions stored in the memory 206, along with an operating system, one or more application programs, other program modules, and program data. In this regard, the processor 204 executes the update service software 210 on the memory 206, thereby performing one or more processes defined herein.

The storage 211, which is part of the memory 206, provides reading from and writing to a non-removable, non-volatile magnetic media (not shown and typically called a "hard drive", either mechanical or solid-state). Although not shown, a magnetic disk drive for reading from and writing to a removable, non-volatile magnetic disk (e.g., a "floppy disk"), and an optical disk drive for reading from or writing to a removable, non-volatile optical disk such as a CD-ROM, DVD-ROM or other optical media can be provided.

The network 250 can be a distributed cloud computing environment (e.g., a cloud distribution system) where tasks are performed by remote processing devices that are linked through a communications within the network 250. The network 250 can comprise hardware and/or software that are similar to the computing device 202 described herein. In the network 250, program modules may be located in both local and remote computer system storage media including memory storage devices. Thus, the web application 251, the firmware service 253, and the database service 255 in a general context are executable instructions (including routines, programs, objects, components, logic, data structures, and so on that perform particular tasks or implement particular data types), being executed by the remote processing devices of the network.

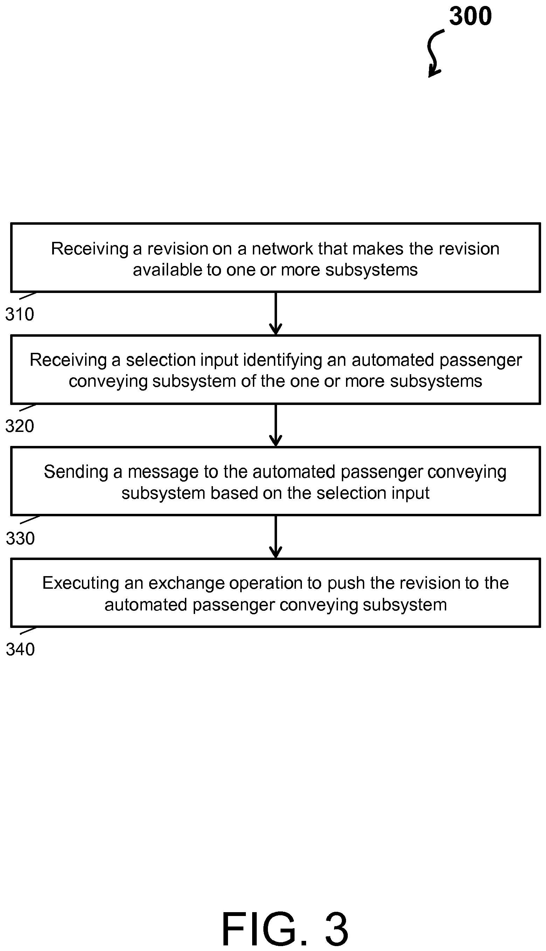

The database 257 is a server, data repository and/or other data store that includes various kinds of mechanisms for storing, accessing, and retrieving various kinds of data, including a hierarchical database, a set of files in a file system, an application database in a proprietary format, a relational database management system (RDBMS), etc. Operations of the network 250 will now be described with respect to FIGS. 3-4.

FIG. 3 depicts a process flow 300 according to one or more embodiments. In general, the process flow 300 is processor-implemented method for pushing a revision to the elevator subsystem 201 (e.g., an automated passenger conveying subsystem) by pushing the revision to the network 250, sending a message to the elevator subsystem 201 (based on a user selection), pulling the revision from the network 250 to the elevator subsystem 201, and pushing the revision to a node(s) of the elevator subsystem 201 (based on onsite user operation).

The process flow 300 at block 310, where the network 250 receives the revision, such that the network 250 makes the revision available to the elevator subsystem 201 (for example, the revision is uploaded to the network by a user or additional device). Practically, the revision is made available to all subsystems in communication with the network 250. Receiving the revision can include storing the revision on the database 257 or firmware service 253 of the network 250. Examples of the revision include a data update, a software update, or a configuration update for a class of devices or components of the elevator subsystem 201.

At block 320, an application executed on a processor of the network 250 receives a selection input identifying the elevator subsystem 201. In accordance with one or more embodiment, the user manually accesses the network 250 and identifies which of the automated passenger conveying subsystem of the one or more subsystems should receive the revision. The application can be the web application 251 and/or the firmware service 253. The selection input can further include a user input identifying the elevator subsystem 201 and a device or component of the elevator subsystem 201 to receive the revision.

At block 330, the application sends a message to the automated passenger conveying subsystem based on the selection input. The message identifies the revision and that the revision is available for downloading and deployment.

At block 340, the network executes an exchange operation to push the revision to the elevator subsystem 201. The exchange operation can comprise the elevator subsystem 201 downloading the revision from the database 257 of the network 250 via the web application 251 or the firmware service 253 through the database service 255 and deploying the revision to a device or component of the elevator subsystem 201 by the computing device 202. The exchange operation can comprise the elevator subsystem 201 providing log files to the network 250 with respect to operations of a device or component of the elevator subsystem 201. In accordance with one or more embodiments, a user can initiate firmware download/upgrade operation to required elevator system/sub-system (e.g., the elevator subsystem 201) and the user can receive a notification of a status of the firmware download/upgrade operation. The status can indicate success or failure of the download/upgrade operation. If the download/upgrade operation fails, the notification can also include an indication as to why there was a failure (e.g., disconnected software, system power off, lack of memory, failed test, etc.).

In view of the process flow 300, the product software management system 200 can initiate software checks, supply updated or new revisions, and/or coordinate downloads and deployments by the elevator subsystem 201. In an embodiment, the software checks and revision supply can be performed in a batch to multiple elevator subsystems 201 (where each elevator and/or elevator subsystems 201 can be sequentially coordinated or coordinated in parallel). Technical effects of embodiments of the process flow 300 include improving operations of revision for the elevator subsystem 201 and components therein by enabling individual revisions to be targeted from the network 250 perspective and then allowing the elevator subsystem 201 to download and deploy the individual revisions as needed. In this regard, reduced man power is required on site (e.g., at the elevator subsystem 201 locations) due to not having to manually identify, hand carry, and load correct software versions to each individual site; an elimination of specific types of site visits, and an enabling of parallel updates to multiple sites are achieved. Thus, embodiments described herein are necessarily rooted in processors of the elevator subsystem 201 and the network 250 to perform proactive operations to overcome problems specifically arising with contemporary procedures for managing and updating software utilized by elevator systems.

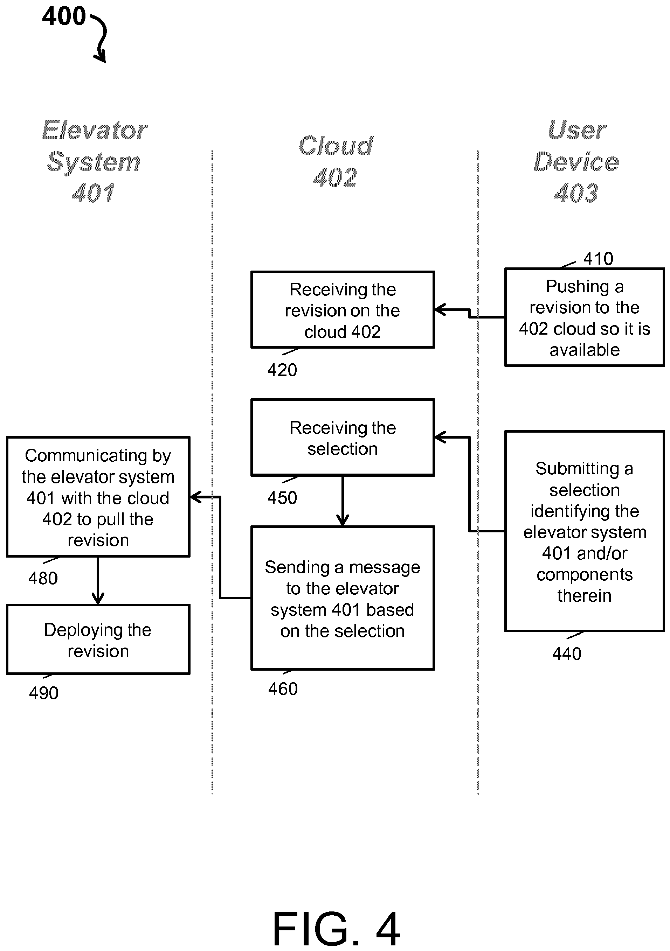

FIG. 4 illustrates a process flow 400 according to one or more embodiments. The process flow 400 is depicted across three operators: an elevator system 401, a cloud 402, and a user device 403. Note that the user device can be a desktop or a laptop computer, along with a smartphone or other mobile device. In general, the process flow 400 is processor-implemented method for pushing a revision to the elevator system 401.

At block 410, the user device 403 pushes a revision to the 402 cloud so it is available. In turn, at block 420, the cloud 402 receives the revision. In this way, the revision remains as stored on the cloud 402 until the elevator system 401 knows about the revision and pulls the revision from the cloud 402.

At block 440, the user device 403 submits a selection identifying the elevator system 401 and/or components therein. At block 450, the cloud 402 receives the selection. At block 460, the cloud 402 sends a message to the elevator system 401 based on the selection. In this way, the elevator system 401 is notified of the revision from the cloud perspective rather than the identification of whether the revision is ready being from the elevator system 401 perspective.

At block 480, the elevator system 401 communicates with the cloud 402 to pull the revision. At block 490, the elevator system 401 deploys the revision. Note that the deployment of the revision can occur manually. Further, note that the deployment can be performed according to a schedule based on elevator idle time.

As described above, embodiments can be in the form of processor-implemented processes and devices for practicing those processes, such as a processor. Embodiments can also be in the form of computer program code containing instructions embodied in tangible media, such as network cloud storage, SD cards, flash drives, floppy diskettes, CD ROMs, hard drives, or any other computer-readable storage medium, wherein, when the computer program code is loaded into and executed by a computer, the computer becomes a device for practicing the embodiments. Embodiments can also be in the form of computer program code, for example, whether stored in a storage medium, loaded into and/or executed by a computer, or transmitted over some transmission medium, loaded into and/or executed by a computer, or transmitted over some transmission medium, such as over electrical wiring or cabling, through fiber optics, or via electromagnetic radiation, wherein, when the computer program code is loaded into an executed by a computer, the computer becomes an device for practicing the embodiments. When implemented on a general-purpose microprocessor, the computer program code segments configure the microprocessor to create specific logic circuits.

The term "about" is intended to include the degree of error associated with measurement of the particular quantity and/or manufacturing tolerances based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

Those of skill in the art will appreciate that various example embodiments are shown and described herein, each having certain features in the particular embodiments, but the present disclosure is not thus limited. Rather, the present disclosure can be modified to incorporate any number of variations, alterations, substitutions, combinations, sub-combinations, or equivalent arrangements not heretofore described, but which are commensurate with the scope of the present disclosure. Additionally, while various embodiments of the present disclosure have been described, it is to be understood that aspects of the present disclosure may include only some of the described embodiments. Accordingly, the present disclosure is not to be seen as limited by the foregoing description, but is only limited by the scope of the appended claims.

## Claims

1. A processor-implemented method for pushing a revision to an automated passenger conveying subsystem, the processor-implemented method comprising:
receiving the revision over a network that makes the revision available to one or more subsystems;
receiving, by an application executed on a processor of the network, a selection input identifying the automated passenger conveying subsystem of the one or more subsystems;
sending, by the application, a message to the automated passenger conveying subsystem based on the selection input, the message identifying that the revision is available for downloading and deployment; and
executing an exchange operation to push the revision to the automated passenger conveying subsystem.

2. The processor-implemented method of claim 1, wherein receiving the revision comprises storing the revision on a database or firmware service of the network.

3. The processor-implemented method of claim 1 or 2, wherein the revision comprises a data update, a software update, or a configuration update for a class of devices or components of the one or more subsystems.

4. The processor-implemented method of any preceding claim, wherein the selection input comprises a user input identifying the automated passenger conveying subsystem from the one or more subsystems and a device or component of the automated passenger conveying to receive the revision.

5. The processor-implemented method of any preceding claim, wherein the exchange operation comprises the automated passenger conveying subsystem downloading the revision from a database of the network via the application or a firmware service of the network and deploying the revision to a device or component of the automated passenger conveying.

6. The processor-implemented method of any preceding claim, wherein the exchange operation comprises the automated passenger conveying subsystem providing log files to the network with respect to operations of a device or component of the automated passenger conveying.

7. The processor-implemented method of any preceding claim, wherein the automated passenger conveying subsystem is an elevator system, an escalator system, or a people mover system, and
wherein the network is a cloud distribution system executing the application on at least the processor.

8. A computer program product comprising a computer readable medium storing processor readable instructions for pushing a revision to an automated passenger conveying subsystem, the processor readable instructions executable by a processor of a network to cause:
receiving the revision over the network that makes the revision available to one or more subsystems;
receiving, by an application executed on the processor of the network, a selection input identifying the automated passenger conveying subsystem of the one or more subsystems;
sending, by the application, a message to the automated passenger conveying subsystem based on the selection input, the message identifying that the revision is available for downloading and deployment; and
executing an exchange operation to push the revision to the automated passenger conveying subsystem.

9. The computer program product of claim 8, wherein receiving the revision comprises storing the revision on a database or firmware service of the network.

10. The computer program product of claim 8 or 9, wherein the revision comprises a data update, a software update, or a configuration update for a class of devices or components of the one or more subsystems.

11. The computer program product of any of claims 8 to 10, wherein the selection input comprises a user input identifying the automated passenger conveying subsystem from the one or more subsystems and a device or component of the automated passenger conveying to receive the revision.

12. The computer program product of any of claims 8 to 11, wherein the exchange operation comprises the automated passenger conveying subsystem downloading the revision from a database of the network via the application or a firmware service of the network and deploying the revision to a device or component of the automated passenger conveying.

13. The computer program product of any of claims 8 to 12, wherein the exchange operation comprises the automated passenger conveying subsystem providing log files to the network with respect to operations of a device or component of the automated passenger conveying.

14. The computer program product of any of claims 8 to 13, wherein the automated passenger conveying subsystem is an elevator system, an escalator system, or a people mover system, and
wherein the network is a cloud distribution system executing the application on at least the processor.

15. A product software management system comprising a network, the network comprising a processor executing processor readable instructions for pushing a revision to an automated passenger conveying subsystem to cause:
receiving the revision over the network that makes the revision available to one or more subsystems;
receiving, by an application executed on the processor of the network, a selection input identifying the automated passenger conveying subsystem of the one or more subsystems;
sending, by the application, a message to the automated passenger conveying subsystem based on the selection input, the message identifying that the revision is available for downloading and deployment; and
executing an exchange operation to push the revision to the automated passenger conveying subsystem.
